# EUROPEAN PATENT APPLICATION

(11) **EP 4 832 095 A1**
(43) Date of publication of application: **28.10.2026**
(21) Application number: 26168291.8
(22) Date of filing: 26.03.2026
(51) Int. Cl.: H01M 4/36, C01G 51/00, C01G 51/42, H01M 4/62, H01M 4/131, H01M 4/505, H01M 4/525, H01M 10/0525, H01M 4/02

(54) **POSITIVE ELECTRODE ACTIVE MATERIAL, METHOD OF PREPARING POSITIVE ELECTRODE ACTIVE MATERIAL, AND RECHARGEABLE LITHIUM BATTERY INCLUDING POSITIVE ELECTRODE ACTIVE MATERIAL**

(30) Priority: 24.04.2025 KR 20250053721; 19.03.2026 KR 20260049859
(71) Applicant: SAMSUNG SDI CO., LTD., Yongin-si, Gyeonggi-do 17084 (KR)
(72) Inventor: Kim, Teayeop, 17084 Yongin-si (KR); Kim, Jinyoung, 17084 Yongin-si (KR); Hwang, Hoseong, 17084 Yongin-si (KR); Lee, Jongjin, 17084 Yongin-si (KR); Ji, Seorin, 17084 Yongin-si (KR)
(74) Representative: Maiwald GmbH

(57) **Abstract**

A positive electrode active material according to some embodiments of the present disclosure may include a core particle including a lithium transition metal composite compound and a coating layer. The coating layer may be disposed on a surface of the core particle. The coating layer may include graphene that may have a layered structure. The positive electrode active material may have a powder conductivity of greater than or equal to about 0.1 mScm⁻¹ when measured at a pressure of 250 MPa.

## Description

### BACKGROUND

### 1. Field

The present disclosure relates to positive electrode active materials, methods of preparing the positive electrode active materials, and rechargeable lithium batteries including the positive electrode active materials.

### 2. Description of the Related Art

A portable information device (such as a cell phone, a laptop, or a smart phone) or an electric vehicle has used a rechargeable lithium battery having high energy density as a driving power source. Recently, research has been actively conducted to use a rechargeable lithium battery with high energy density as a driving power source for hybrid or electric vehicles or as a power storage source.

To improve conductivity of electrodes (whose main component is a non-conductive positive electrode active material) in the manufacture of electrode plates, research is actively being conducted on technologies for coating a positive electrode active material with conductive materials, such as carbon materials, and conductive polymers that exhibit conductive properties. This coating process may be carried out by a wet process (i.e., using a solvent) or by a dry process (i.e., without using a solvent), but relying heavily on the wet process increases production costs of the positive electrode active material.

Therefore, it is advantageous to develop a positive electrode active material that enables uniform coating, improves conductivity, and reduces production costs.

### SUMMARY

Provided are a positive electrode active material, a method of preparing the positive electrode active material, and a rechargeable lithium battery including the positive electrode active material. The positive electrode active material includes (or the method of preparing the positive electrode active material enables) a uniform coating, and the positive electrode active material includes improved conductivity (or the method of preparing the positive electrode active material improves conductivity of the positive electrode active material) while allowing for reduced production costs due to a coating layer formed on the positive electrode active material that includes graphite particulates on surfaces of core particles, which is achieved through dry mixing.

A positive electrode active material according to some embodiments of the present disclosure may include a core particle including a lithium transition metal composite compound and a coating layer. The coating layer may be disposed on a surface of the core particle. The coating layer may include graphene that may have a layered structure. The positive electrode active material may have a powder conductivity of greater than or equal to about 0.1 mScm⁻¹ when measured at a pressure of 250 MPa.

In some embodiments, the lithium transition metal composite compound may include a lithium cobalt-based oxide represented by the following:

Liₐ₂Coₓ₂M³_{y2}O_{2-b2}X_{b2}.

0.9≤a2≤1.8, 0.7≤x2≤1, 0≤y2≤0.3, 0.9≤x2+y2≤1.1, and 0≤b2≤0.1. M³ may be Al, B, Ba, Ca, Ce, Cr, Cu, Fe, Mg, Mn, Mo, Ni, Se, Si, Sn, Sr, Ti, V, W, Y, Zn, Zr, or a combination thereof. X may be F, P, S, or a combination thereof.

In some embodiments, the core particle may be in a form of a single particle.

In some embodiments, the core particle may include small particles having an average particle diameter D₅₀ of greater than or equal to about 0.1 µm and less than about 9 µm and large particles having an average particle diameter D₅₀ from about 9 µm to about 30 µm.

In some embodiments, the coating layer may include graphene having from 2 to 50 layers.

In some embodiments, an interlayer spacing d₀₀₂ of the layered structure may be from about 0.320 nm to about 0.350 nm.

In some embodiments, the graphene may have a ratio I_{D}/I_{G}, represented as a peak intensity I_{D} near 1350 cm⁻¹ to a peak intensity I_{G} near 1580 cm⁻¹ in the Raman spectrum, of about 0.15 to about 0.50.

In some embodiments, the graphene of the coating layer may be derived from graphite particulates having an average size of less than or equal to about 2.5 µm.

In some embodiments, the positive electrode active material may include graphene in an amount from about 0.01 wt% to about 1 wt% based on 100 wt% of the positive electrode active material.

In some embodiments, the coating layer may be a film that continuously surrounds the surface of the core particle. A thickness of the coating layer may be from about 1 nm to about 40 nm.

A method of preparing a positive electrode active material according to some embodiments of the present disclosure may include preparing core particles including a lithium transition metal composite compound, preparing graphite particulates having an average size D₅₀ of less than or equal to about 2.5 µm, and dry mixing the core particles and the graphite particulates to obtain a positive electrode active material.

In some embodiments, preparing the graphite particulates may include pulverizing flake graphite having an average size D₅₀ from about 3 µm to about 25 µm.

In some embodiments, pulverizing the flake graphite may be performed using a ball mill device including zirconia beads each having a size from about 1 mm to about 3 mm. Pulverizing the flake graphite may be performed at a speed ranging from about 200 rpm to about 5,000 rpm for a period ranging from about 30 minutes to about 4 hours.

In some embodiments, dry mixing the core particles and the graphite particulates may be performed with an amount of graphite particulates ranging from about 0.1 parts by weight to about 0.5 parts by weight per 100 parts by weight of the core particles.

A rechargeable lithium battery according to some embodiments of the present disclosure may include a positive electrode, a negative electrode, and an electrolyte. The positive electrode may include a positive electrode current collector and a positive electrode active material layer disposed on the positive electrode current collector, the positive electrode active material layer including the positive electrode active material as described above.

According to some embodiments, a positive electrode active material may form a coating layer including graphite particulates on the surface of a core particle, thereby enabling uniform coating of the positive electrode active material, improving conductivity, and reducing production costs. In addition, because the rechargeable lithium battery includes the positive electrode active material, which is conductive, an amount of the conductive material may be minimized during the manufacture of the positive electrode, thereby allowing for a battery having high capacity and high energy density.

A method of preparing a positive electrode active material according to some embodiments may provide a positive electrode active material having uniform coating, improved conductivity, and reduced production costs.

### BRIEF DESCRIPTION OF THE DRAWINGS

FIGS. 1 to 4 are each a view schematically showing a rechargeable lithium battery according to some embodiments of the present disclosure.
FIG. 5 is a scanning electron microscope photograph of a surface of the positive electrode active material prepared in Example 2 according to some embodiments of the present disclosure.
FIG. 6 is a scanning electron microscope photograph of a surface of the positive electrode active material prepared in Comparative Example 1 according to some embodiments of the present disclosure.
FIG. 7 is a scanning electron microscope photograph of a surface of the positive electrode active material prepared in Comparative Example 5 according to some embodiments of the present disclosure.
FIG. 8 is a transmission electron microscope photograph of a coating layer in a cross-section of the positive electrode active material prepared in Example 1 according to some embodiments of the present disclosure.
FIG. 9 is a transmission electron microscope photograph of a coating layer in a cross-section of the positive electrode active material prepared in Example 2 according to some embodiments of the present disclosure.
FIG. 10 is a graph showing powder resistance vs. pressure of the positive electrode active materials prepared in Examples 1 to 3 according to some embodiments of the present disclosure.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is used to describe some embodiments and is not intended to limit the present disclosure. The singular expression includes the plural expression unless the context clearly dictates otherwise.

As used herein, "combination thereof" means a mixture, a laminate, a composite, a copolymer, an alloy, a blend, or a reaction product of the constituents.

Herein, it should be understood that terms such as "comprises," "includes," or "have" are intended to designate the presence of an embodied feature, number, step, element, or a combination thereof, but such terms do not preclude the possibility of the presence or addition of one or more other features, number, step, element, or a combination thereof.

In the drawings, the thickness of layers, films, panels, or regions are exaggerated for clarity and like reference numerals designate like elements throughout the specification. It will be understood that when an element such as a layer, film, region, or substrate is referred to as being "on" another element, the element can be directly on the other element, or intervening elements may also be present. In contrast, when an element is referred to as being "directly on" another element, there are no intervening elements present.

"Layer" herein includes not only a geometry formed on the whole surface when viewed from a plan view, but also a geometry formed on a partial surface.

The average particle diameter may be measured by a method well known to those skilled in the art (for example, by a particle size analyzer or by a transmission electron microscope image or a scanning electron microscope image). Alternatively, it is possible to obtain an average particle diameter value by measuring using a dynamic light scattering method, performing data analysis, counting the number of particles for each particle size range, and performing calculations from resulting values and/or measurements. Unless otherwise defined, the average particle diameter D₅₀ may mean the diameter of particles having a cumulative volume of 50 volume% in the particle size distribution. In other words, when another definition is not otherwise provided, the average particle diameter D₅₀ means a diameter of particles having a cumulative volume of 50 volume% in a particle size distribution that is obtained by measuring a size (diameter or long axis length) of 20 particles at random in a scanning electron microscope image. Herein, the size of may vary depending on the particle shape in terms of the measurement target. For example, the diameter may be measured for spherical particles, whereas the length of the major axis may be measured for non-spherical particles. The volume of each particle is calculated using the value measured as the diameter or the length of the major axis and assuming a spherical shape of the particle.

Herein, "or" is not to be construed as an exclusive meaning, for example, "A or B" is construed to include A, B, and A+B.

"Metal" is interpreted to include ordinary metals, transition metals, and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

### Positive Electrode Active Material

The positive electrode active material according to some embodiments may include core particles including a lithium transition metal composite compound and a coating layer disposed on a surface of the core particle and including layered graphene. The positive electrode active material may have a powder conductivity of greater than or equal to about 0.1 mScm⁻¹ when measured at a pressure of about 250 MPa.

To improve the charge/discharge capacity, efficiency, and cycle-life characteristics of rechargeable lithium batteries, electrical conductivity of the positive electrode is important. However, the lithium transition metal composite compound included mainly in the positive electrode is a non-conductive material and does not have electrical conductivity by itself.

Manufacturing a rechargeable lithium battery may include a method of preparing a slurry by mixing a conductive material with a positive electrode active material and using the slurry to manufacture a positive electrode. However, as an amount of the conductive material added during the preparation of the positive electrode slurry increases to improve conductivity, an amount of the positive electrode active material added relatively decreases, which limits achieving a desired energy density.

Another method may include coating the surface of the positive electrode active material using a carbon material or conductive polymer having conductivity. By reducing the amount of conductive material added during the preparation of the positive electrode slurry and increasing the amount of positive electrode active material added, it is possible to achieve high capacity and high energy density, thereby overcoming the problems that arise when mixing a conductive material during preparation of the positive electrode slurry. There are two methods of coating a conductive material on the surface of a positive electrode active material: a wet method using a solvent and a dry method not using a solvent. Uniform coating may be achieved by mainly using a wet method. However, a production cost increasing, due to the nature of having to use a solvent, is a problem, and, if the production cost is reduced by the dry method, there is a problem in that carbon materials generally have low dispersibility and, thus, tend to be coagulated together, making uniform coating difficult.

Accordingly, the inventors of the present invention have designed a carbon material capable of securing high capacity and high energy density. This is achieved by reducing the amount of conductive material added and relatively increasing the amount of positive electrode active material added during the preparation of the positive electrode slurry. Further, this is achieved by using a method of uniformly coating a conductive material on the surface of the positive electrode active material, even though the coating process is dry coating, to reduce production costs. Accordingly, a positive electrode active material coated with layered graphene may be uniformly coated even during dry coating, which reduces manufacturing costs, and, because the positive electrode active material exhibits conductivity, it is possible to achieve high capacity and high energy density by not adding a conductive material during manufacture of the positive electrode or by minimizing an amount of the conductive material during manufacture of the positive electrode.

The powder conductivity of the positive electrode active material measured at a pressure of 250 MPa may be greater than or equal to about 0.2 mScm⁻¹, greater than or equal to about 0.3 mScm⁻¹, greater than or equal to about 0.4 mScm⁻¹, greater than or equal to about 0.5 mScm⁻¹, or greater than or equal to about 0.6 mScm⁻¹, and the upper limit is not specifically limited because the greater the upper limit the greater the powder conductivity but may be, for example, less than or equal to about 55 mScm⁻¹, less than or equal to about 50 mScm⁻¹, less than or equal to about 45 mScm⁻¹, or less than or equal to about 42 mScm⁻¹. The powder conductivity of the positive electrode active material may be measured by measuring the powder resistance while controlling the pressure applied to the powder using a powder resistance meter (e.g., PD-600, Nittoseiko Analytech) equipped with a 4-pin probe for about 3 g of the positive electrode active material and by taking the reciprocal of the powder resistance value at a pressure of about 250 MPa. The positive electrode active material that satisfies the powder conductivity described above exhibits powder conductivity, so that the amount of conductive material added during the manufacture of the positive electrode may be minimized, thereby enabling the implementation of high capacity and high energy density.

### Core Particles

The core particles include a lithium transition metal composite compound.

The lithium transition metal composite compound may be used, without limitation, as a positive electrode active material for a rechargeable lithium battery. The lithium transition metal composite compound may be a compound being capable of intercalating and deintercalating lithium.

The lithium transition metal composite compound may include a lithium nickel-based oxide, a lithium cobalt-based oxide, a lithium manganese-based oxide, a lithium iron phosphate-based compound, a cobalt-free lithium nickel-manganese-based oxide, a lithium-manganese-rich composite oxide, or a combination thereof.

The lithium transition metal composite compound of the core particles may be a compound represented by any one of the following chemical formulas. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The lithium transition metal composite compound of the core particle may include, for example, a lithium nickel-based oxide represented by Chemical Formula 1, a lithium cobalt-based oxide represented by Chemical Formula 2, a lithium iron phosphate-based compound represented by Chemical Formula 3 or 4, a cobalt-free lithium nickel-manganese-based oxide represented by Chemical Formula 5, or a combination thereof.

Chemical Formula 1 is as follows:

[Chemical Formula 1] Liₐ₁Niₓ₁M¹_{y1}M²_{z1}O_{2-b1}X_{b1}.

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1. Further, M¹ and M² are different elements, M¹ and M² are each independently Al, B, Ba, Ca, Ce, Co, Cr, Cu, Fe, Mg, Mn, Mo, Nb, Si, Sn, Sr, Ti, V, W, Y, Zr, or a combination thereof. Even further, X is F, P, S, or a combination thereof.

In Chemical Formula 1, 0.6≤x1≤1, 0≤y1≤0.4, and 0≤z1≤0.4, or 0.8≤x1≤1, 0≤y1≤0.2, and 0≤z1≤0.2.

Chemical Formula 2 is as follows:

[Chemical Formula 2] Liₐ₂Coₓ₂M³_{y2}O_{2-b2}X_{b2}.

In Chemical Formula 2, 0.9≤a2≤1.8, 0.7≤x2≤1, 0≤y2≤0.3, 0.9≤x2+y2≤1.1. Further, 0≤b2≤0.1, M³ is Al, B, Ba, Ca, Ce, Cr, Cu, Fe, Mg, Mn, Mo, Ni, Se, Si, Sn, Sr, Ti, V, W, Y, Zn, Zr, or a combination thereof. Even further, X is F, P, S, or a combination thereof.

Chemical Formula 3 is as follows:

[Chemical Formula 3] Liₐ₃Fe₍₁₋ₓ₃₎M⁴ₓ₃PO₄.

In Chemical Formula 3, 0.9≤a3≤1.5, 0≤x3≤0.4. Further, M⁴ is Al, B, Ca, Ce, Cr, Cu, La, Mg, Mn, Mo, Nb, Ni, Si, Sn, Sr, Ti, V, W, Y, Zn, Zr, or a combination thereof.

In Chemical Formula 3, 0.9≤a3≤1.5. For example, 0.9≤a3≤1.2 or 0.95≤a3≤1.1. In addition, 0≤x3≤0.4, 0≤x3≤0.3, 0≤x3≤0.2, 0≤x3≤0.1, or 0≤x3≤0.05.

Chemical Formula 4 is as follows:

[Chemical Formula 4] Liₐ₄Mnₓ₄Fe_{(1-x4-y4)}M⁵_{y4}PO₄.

In Chemical Formula 4, 0.9≤a4≤1.5, 0.1≤x4≤0.9, 0≤y4≤0.9. Further, M⁵ is Al, B, Ca, Ce, Cr, Cu, La, Mg, Mo, Nb, Ni, Si, Sn, Sr, Ti, V, W, Y, Zn, Zr, or a combination thereof.

In Chemical Formula 4, 0.9≤a4≤1.5. For example, 0.9≤a4≤1.2, or 0.95≤a4≤1.1. In addition, 0.1≤x4≤0.9, 0.3≤x4≤0.9, or 0.4≤x4≤0.8, and 0≤y4≤0.4, 0≤y4≤0.3, 0≤y4≤0.2, 0≤y4≤0.1, or 0≤y4≤0.05.

Chemical Formula 5 is as follows:

[Chemical Formula 5] Liₐ₅Niₓ₅Mn_{y3}M⁶_{z5}O_{2-b5}X_{b5}.

In Chemical Formula 5, 0.9≤a5≤1.8, 0.8≤x5<1, 0<y5≤0.2, 0≤z5≤0.2, 0.9≤x5+y5+z5≤1.1, and 0≤b5≤0.1. Further, M⁶ is Al, B, Ba, Ca, Ce, Cr, Fe, Mg, Mo, Nb, Si, Sn, Sr, Ti, V, W, Y, Zr, or a combination thereof. Even further, X is F, P, S, or a combination thereof.

The lithium transition metal composite compound may include a lithium cobalt-based oxide represented by Chemical Formula 2. When the core particles include the lithium cobalt-based compound, a high-voltage design of a rechargeable lithium battery is possible. Further, since gas generation at high voltage is reduced, reliability and safety of the rechargeable lithium battery may be improved, and a synergistic effect may be exerted in a rapid charging system to suppress battery resistance.

The core particles each may be in a form of a secondary particle formed by agglomeration of a plurality of primary particles or may be in a form of a single particle. The single particle exists alone without a grain boundary within the particle, is composed of one particle and may be a monolith structure, a one-body structure, or a non-agglomerated particle, in which particles are not agglomerated with each other but exist as an independent phase in terms of morphology and may be expressed as a single crystal. A geometry of the core particles is not particularly limited and may include various geometries such as a polyhedral, spherical, ellipsoidal, plate, rod, or irregular geometry. When the lithium transition metal composite compound includes a lithium cobalt-based oxide represented by Chemical Formula 2, the core particles may be in a form of single particles.

An average particle diameter D₅₀ of the core particles may be about 0.1 µm to about 30 µm, for example, about 1 µm to about 25 µm, about 1 µm to about 20 µm, about 1 µm to about 18 µm, about 3 µm to about 15 µm, or about 5 µm to about 15 µm. The core particles with the above particle size range may achieve high capacity and high energy density. The average particle diameter may be obtained by selecting about 20 random particles from a scanning electron microscope image of core particles, measuring their particle diameters (diameter, long diameter, or long axis length), then obtaining a particle size distribution, and then taking the size of particles having a cumulative volume of 50 volume% from the particle size distribution as the average particle diameter.

The core particles may have a bimodal form including small particles having an average particle diameter D₅₀ of greater than or equal to about 0.1 µm and less than about 9 µm and large particles having an average particle diameter D₅₀ from about 9 µm to about 30 µm. When the core particles are used in a mixed form of large and small particles, such as a bimodal form, the small particles may fill the gaps between the large particles, thereby improving an integration density of the positive electrode active material within a unit volume, thereby improving the energy density per unit volume of the positive electrode. A weight ratio of the large particles and the small particles included in the core particles is not specifically limited but may be, for example, from about 1:9 to about 9:1, from about 2:8 to about 9:1, from about 3:7 to about 9:1, from about 4:6 to about 9:1, or from about 5:5 to about 9:1.

### Coating Layer

The coating layer is disposed on the surface of the core particle and includes graphene having a layered structure. The positive electrode active material including the coating layer exhibits electrical conductivity in itself, so that the amount of conductive material added may be minimized during the manufacture of the positive electrode, and the amount of positive electrode active material added may be relatively increased, enabling the implementation of high capacity and high energy density. In addition, the graphene having the layered structure may be uniformly coated even during dry coating, thereby reducing production costs.

A number of layers of the layered structure is not specifically limited but may be, for example, expressed as a layered structure from about 2 to about 50 atomic layers. The coating layer may include graphene having a layered structure from about 5 to about 50 layers, from about 8 to about 49 layers, from about 10 to about 48 layers, from about 13 to about 47 layers, from about 15 to about 46 layers, or from about 17 to about 46 layers. The number of layers in the layered structure may be measured from high-resolution transmission electron microscopy (HR-TEM) images of the particles of the positive electrode active material.

The interlayer spacing d₀₀₂ of the layered structure may be from about 0.320 nm to about 0.350 nm, for example, from about 0.325 nm to about 0.348 nm, from about 0.328 nm to about 0.345 nm, or from about 0.330 nm to about 0.342 nm. When the interlayer spacing d₀₀₂ of the layered structure satisfies the above ranges, the conductivity of the positive electrode active material itself may be further improved. The interlayer spacing d₀₀₂ may be measured by a method known to those skilled in the art. The interlayer spacing d₀₀₂ of the layered structure may be measured by obtaining a peak of a 002 plane through X-ray diffraction (XRD) of the coating layer and then analyzing the peak of the 002 plane. The 002 plane represents the range of about 25.0° < 2θ < 27.0°, where 2θ represents the diffraction angle of incident rays. XRD measurement data may be subjected to noise removal (baseline setting) using a conventional program equipped with the XRD device as a data processing and analysis program. Additionally, the peak profile of the peak on the 002 plane may be fitted with a conventional fitting function such as a Gaussian function or a Lorenz function. In addition, the interlayer spacing d₀₀₂ of the layered structure may be measured by a method of measuring the interlayer spacing d₀₀₂ of graphite particulates, and the interlayer spacing d₀₀₂ of graphite particulates may be measured through XRD analysis of the graphite particulates.

The graphene of the coating layer may have a ratio I_{D}/I_{G} of the peak intensity I_{D} around 1350 cm⁻¹ to the peak intensity I_{G} around 1580 cm⁻¹ in a Raman spectrum of about 0.15 to about 0.50, for example, about 0.15 to about 0.45, about 0.18 to about 0.45, or about 0.20 to about 0.40. When the I_{D}/I_{G} value of the graphene satisfies the above ranges, powder conductivity may be imparted to the positive electrode active material itself.

The graphene of the coating layer may be derived from graphite particulates. A coating layer may be formed with a uniform thickness on the surface of the core particle, and powder conductivity may be imparted to the positive electrode active material. "Graphite particulates" refers to graphite that is particulate, and "particulate" refers to particles that have an average particle size or diameter on the order of several nanometers to several micrometers. Particularly, the graphite particulates are graphite having an average size of less than or equal to about 2.5 µm. The positive electrode active material may have electrical conductivity even with a small amount of graphite particulates by including a coating layer including graphite particulates. The graphite particulates may be commercially available graphite or graphite manufactured therefrom, as long as graphite particulates satisfy the above average particle diameter.

The graphite particulates are not specifically limited in type as long as the graphite particulates include graphite, and the graphite particulates may include, for example, natural graphite or artificial graphite.

The graphite particulates may be particles having a plate geometry, and the average size of the graphite particulates may be less than or equal to about 2 µm, less than or equal to about 1.5 µm, less than about 1 µm, less than or equal to about 0.7 µm, less than or equal to about 0.5 µm, or less than or equal to about 0.3 µm and may be greater than or equal to about 0.01 µm, greater than or equal to about 0.05 µm, greater than or equal to about 0.07 µm, greater than or equal to about 0.1 µm, or greater than or equal to about 0.2 µm. The average size of the graphite particulates may be measured through a particle size analyzer, and "average size of the graphite particulates" means the size of particles having a cumulative volume of 50 volume% in the particle size distribution. Also, the particle size here may mean a length of the long axis in the plane direction perpendicular to the thickness direction in the plate geometry. When the average size of the graphite particulates satisfies the above range, a coating layer of uniform thickness may be formed on the surface of the core particle, and the positive electrode active material including the coating layer may exhibit powder conductivity.

The graphite particulates may have a diameter D₁₀ of less than or equal to about 500 nm, for example, from about 10 nm to about 500 nm, from about 20 nm to about 400 nm, from about 30 nm to about 300 nm, from about 40 nm to about 200 nm, from about 50 nm to about 150 nm, or from about 60 nm to about 120 nm. The diameter D₁₀ of the graphite particulates may be obtained by using a particle size analyzer to obtain a particle size distribution of the graphite particulates and taking the diameter of particles having a cumulative volume of 10 volume% in the particle size distribution as the diameter D₁₀. Also, the particle size may mean a length of the long axis in the plane direction perpendicular to the thickness direction in the plate geometry.

The graphite particulates may have a diameter D₉₀ of less than or equal to about 20 µm, for example, from about 5 µm to about 20 µm, from about 6 µm to about 18 µm, from about 7 µm to about 16 µm, from about 8 µm to about 14 µm, from about 9 µm to about 12 µm, or from about 10 µm to about 12 µm. The diameter D₉₀ of the above graphite particulates may be obtained by using a particle size analyzer to obtain a particle size distribution of the graphite particulates and taking the diameter of particles having a cumulative volume of 90 volume% in the particle size distribution as the diameter D₉₀. Also, the particle size may mean a length of the long axis in the plane direction perpendicular to the thickness direction in the plate geometry.

A span value of the graphite particulates may be greater than about 1, for example, from about 1.05 to about 8, from about 1.1 to about 7, from about 1.2 to about 6, or from about 1.4 to about 5. The span of the graphite particulates can be calculated as (D₉₀-D₁₀)/D₅₀, and D₁₀, D₅₀, and D₉₀ may be taken as the diameters corresponding to 10 volume%, 50 volume%, 90 volume%, respectively, of the cumulative volume in the particle size distribution. A greater span value of the graphite particulates means a wider particle size distribution, and a smaller span value of the graphite particulates means a narrower and more uniform particle size distribution.

The graphite particulates may have a BET specific surface area from about 30 m²/g to about 400 m²/g, for example, from about 50 m²/g to about 400 m²/g, from about 100 m²/g to about 400 m²/g, from about 150 m²/g to about 400 m²/g, from about 200 m²/g to about 400 m²/g, from about 250 m²/g to about 400 m²/g, or from about 300 m²/g to about 400 m²/g. The BET specific surface area of the graphite particulates may be measured using the Brunauer-Emmett-Teller (BET) method. When the BET specific surface area of the graphite particulates satisfies the above ranges, uniform coating is possible, and electrical conductivity may be achieved even with a small amount of coating.

The graphite particulates may have a ratio of the length of the long axis in the plane direction to the thickness in a plate geometry from about 50 to about 1000. When a ratio of a length of the long axis in the plane direction to a thickness of the graphite particulates satisfies the above range, a uniform coating layer may be formed, and the electrical conductivity of the positive electrode active material may be improved. The ratio of the length of the long axis in the plane direction to the thickness of the graphite particulates may be measured based on the electron microscope image of the graphite particulates. In the scanning electron microscope image of the graphite particulates, the thickness of the graphite particulates may be measured, and the length of the long axis in the plane direction orthogonal to the thickness direction may be measured to calculate the ratio. The thickness and long axis length of the graphite particulates may mean an arithmetic mean of each value obtained through image analysis of a plurality of graphite particulates. Additionally, a combination of thickness and long axis length of the graphite particulates is not limited to values measured from a single identical graphite particulate, and may be a combination of values measured from different graphite particulates.

The graphite particulates may have a ratio I_{D}/I_{G} of the peak intensity I_{D} around 1350 cm⁻¹ to the peak intensity I_{G} around 1580 cm⁻¹ in a Raman spectrum from about 0.15 to about 0.50, for example, from about 0.15 to about 0.45, from about 0.18 to about 0.45, or from about 0.20 to about 0.40. When the I_{D}/I_{G} value of the graphite particulates satisfies the above ranges, a coating layer may be formed with a uniform thickness on the surface of the core particles, and the positive electrode active material may maximize adhesion and conductivity with the electrode plate.

The graphite particulates in the coating layer may be included in an amount from about 0.01 wt% to about 1 wt% based on a total weight (100 wt%) of the positive electrode active material, for example, from about 0.05 wt% to about 0.9 wt%, from about 0.1 wt% to about 0.8 wt%, from about 0.1 wt% to about 0.6 wt%, or from about 0.1 wt% to about 0.4 wt%. Even when the graphite particulates satisfy the ranges based on the total weight of the positive electrode active material, it is possible to keep powder conductivity of the positive electrode active material, thereby implementing electrical conductivity. If the graphite particulates are out of the above amount-wt% ranges based on the total weight of the positive electrode active material, energy density may be reduced, deteriorating performance of the battery.

The coating layer including the graphite particulates may be in a form of a film that continuously wraps around a core particle surface or in a form of an island that discontinuously exists on the core particle surface. The coating layer may be in a form of a film that continuously surrounds the surface of the core particle, or in a form of a shell that surrounds the entire surface of the core particle. This is distinguished from the island form that discontinuously exists on the core particle surface. According to some embodiments, the coating layer may completely cover the core particle surface in order to have a very thin and uniform thickness so that the positive electrode active material does not show an increase in resistance or a decrease in capacity, and the positive electrode active material may exhibit improved structural stability, side reactions with an electrolyte may be effectively suppressed, and electrical conductivity of the positive electrode active material may be realized (making it possible to reduce an amount of a conductive material in a positive electrode, while relatively increasing an amount of the positive electrode active material), thereby implementing high capacity and high energy density for the battery.

The coating layer may have a thickness from about 1 nm to about 40 nm, for example, from about 1 nm to about 35 nm, from about 1 nm to about 30 nm, from about 1 nm to about 25 nm, or from about 1 nm to about 20 nm. If the coating layer has a thickness within these ranges, the coating may neither increase resistance nor decrease capacity but, rather, may improve structural stability of the positive electrode active material, may effectively suppress side reactions with an electrolyte, and may implement electrical conductivity of the positive electrode active material. The thickness of the coating layer may be measured through, for example, TOF-SIMS, XPS, or EDS analysis, and the thickness range of the coating layer may be measured through TEM-EDS line profile.

The coating layer may be thin, with a thickness of tens to hundreds of nanometers but may be uniform in thickness. A deviation in a coating layer thickness in one positive electrode active material particle may be less than or equal to about 20%, less than or equal to about 18%, or less than or equal to about 15%. The deviation in the coating layer thickness refers to the coating layer thickness within one positive electrode active material particle. The deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. A deviation or a standard deviation of the thickness of the coating layer satisfying the above ranges means that a coating layer of uniform thickness is well formed as a film on the surface of the positive electrode active material particle, thereby improving the structural stability of the positive electrode active material, effectively suppressing side reactions with the electrolyte, minimizing increases in resistance or decreases in capacity due to the coating, and implementing electrical conductivity for the positive electrode active material.

In some embodiments, a difference between the highest and lowest thicknesses of the coating layer may be less than or equal to about 17 nm, for example, less than or equal to about 15 nm, less than or equal to about 10 nm, or less than or equal to about 8 nm, and greater than or equal to about 0.01 nm, greater than or equal to about 0.05 nm, greater than or equal to about 0.07 nm, or greater than or equal to about 0.1 nm. The difference between the highest and lowest thicknesses of the coating layer satisfying the above ranges means that a coating layer of uniform thickness is well formed as a film on the surface of the particles of the positive electrode active material, and accordingly, the positive electrode active material may maximize adhesion to the electrode plate and may maximize conductivity. The highest and lowest thicknesses of the coating layer may be measured based on an electron microscope image of the positive electrode active material. In an electron microscope image of a cross-section of the particle of the positive electrode active material, a thickness of the thickest part of the cross-section of the coating layer may be defined as a highest thickness of the coating layer, and a thickness of the thinnest part may be defined as a lowest thickness of the coating layer. A thickness of the coating layer may be a vertical distance from an outer surface of the core particle to an outer surface of the coating layer. A scanning electron microscope or a transmission electron microscope may be used as an electron microscope.

### Method of Preparing Positive Electrode Active Material

The method of preparing the positive electrode active material according to some embodiments includes preparing core particles including a lithium transition metal composite compound; preparing graphite particulates; and dry mixing the core particles and the graphite particulates to obtain a positive electrode active material. Herein, the graphite particulates may have an average size of less than or equal to about 2.5 µm, the positive electrode active material has a powder conductivity of greater than or equal to about 0.1 mScm-1, when measured at a pressure of about 250 MPa. One or more details of the resulting positive electrode active material may be the same as those of the positive electrode active material described above, so some of the details described above will not be repeated in the description below of the method of preparing the positive electrode active material.

In the method of preparing a positive electrode active material according to some embodiments, graphite used as a conductive material may be pulverized to prepare graphite particulates, which are used to form a coating layer containing graphene and having a layered structure on the surface of the core particles. The positive electrode active material including the coating layer containing graphene may make it possible to achieve uniform coating for the positive electrode active material and may create electrical conductivity for the positive electrode active material. In addition, during the manufacture of a positive electrode, it is possible to minimize an amount of a conductive material added, so it is possible to relatively increase an amount of the positive electrode active material added, which may provide for a high-capacity and high-energy-density rechargeable lithium battery including the positive electrode active material. On the other hand, if the graphite particulates are used as a coating material, it is possible to adopt dry coating, thereby reducing a cost.

### Preparing of Core Particles

Core particles including a lithium transition metal composite compound may be prepared. The core particles prepared in this step are described in the same way as those of the aforementioned positive electrode active material and will not be repeated.

### Preparing of Graphite particulates

Graphite particulates are prepared. Specific properties of the graphite particulates prepared in this step (for example, an average size, or I_{D}/I_{G}) may be described in the same way as those in the aforementioned positive electrode active material and will not be repeated.

When preparing the graphite particulates, the graphite particulates (which may be the same or similar to the graphite particulates in the aforementioned positive electrode active material) may be obtained from a commercially available source or may be prepared by pulverizing graphite to prepare graphite particulates.

In some embodiments, the preparing of the graphite particulates may include pulverizing graphite to prepare the graphite particulates.

The type of the graphite is not specifically limited and may be, for example, flake graphite. The graphite may be graphite used in a rechargeable lithium battery.

The flake graphite may have an average size from about 3 µm to about 25 µm, for example from about 3 µm to about 20 µm, from about 3 µm to about 15 µm, from about 3 µm to about 10 µm, from about 3 µm to about 8 µm, from about 3 µm to about 6 µm, from about 3 µm to about 4 µm, or from about 3 µm to about 3.5 µm. An average size of the flake graphite can be measured from a scanning electron microscope image. The average size of the flake graphite may be measured through a particle size analyzer, and the average size of the flake graphite means the size of particles having a cumulative volume of 50 volume% in the particle size distribution. Also, the flake graphite may have a plate-like particle shape, and the particle size here may mean a length of the long axis in a plane direction perpendicular to a thickness direction in the plate geometry.

The flake graphite may have a ratio I_{D}/I_{G} of the peak intensity I_{D} near 1350 cm⁻¹ to the peak intensity I_{G} near 1580 cm⁻¹ in a Raman spectrum of greater than or equal to about 0.01 and less than about 0.15, for example, about 0.02 to about 0.14, about 0.08 to about 0.14, or about 0.1 to about 0.14.

The pulverizing may be performed using a milling process. The milling process may utilize a method known to those skilled in the art, and a device such as a ball mill, a bead mill, a jet mill, a pin mill, a roller mill, or an air classifier mill (ACM) may be used.

The pulverizing may be performed using a ball mill device, and zirconia beads (ZrO₂ beads) having a size from about 1 mm to about 3 mm may be used as balls (pulverizing media). The size of the zirconia beads may be from about 1.2 mm to about 2.8 mm, from about 1.3 mm to about 2.7 mm, or from about 1.5 mm to about 2.5 mm. If the size of the ball satisfies the above ranges, the particle size of the graphite particulates may be controlled to the desired level.

When the pulverizing is performed using a ball mill device, an amount of balls to be introduced is not specifically limited, but, for example, the balls may be introduced in an amount ranging from about 500 parts by weight to about 2000 parts by weight per 100 parts by weight of the graphite. The ball may be added in an amount ranging from about 600 parts by weight to about 1800 parts by weight, from about 700 parts by weight to about 1600 parts by weight, from about 800 parts by weight to about 1400 parts by weight, or from about 900 parts by weight to about 1100 parts by weight, based on 100 parts by weight of the graphite.

The pulverizing may vary depending on the pulverizing device and is not specifically limited, but when the pulverizing is performed using a ball mill device, it may be performed under conditions ranging from about 200 rpm to about 5000 rpm, for example, under conditions ranging from about 250 rpm to about 4,500 rpm, from about 300 rpm to about 4,000 rpm, from about 400 rpm to about 3,000 rpm, or from about 600 rpm to about 3,000 rpm. The pulverizing time may vary depending on the pulverizing speed and is not specifically limited but may be carried out for about 30 minutes to about 3 hours or about 35 minutes to about 3 hours. When the pulverizing speed and time satisfy the above ranges, the particle size of the graphite particulates may be controlled to the desired level.

The graphite particulates are prepared by pulverizing graphite according to the above pulverizing methods. The graphite particulates may have an advantage of excellent electrical conductivity, and, at the same time, by manufacturing graphite in the form of graphite particulates with a dense structure through pulverization, it is possible to increase the specific surface area of the graphite particulates.

### Obtaining of Positive Electrode Active Material

The core particles and the graphite particulates are dry-mixed to obtain a positive electrode active material. In this step, crystalline carbon derived from the graphite particulates is coated on the surface of the core particles according to the dry mixing to form a coating layer containing graphene with a layered structure on the surface of the core particles. The coating layer in this step is formed to be thin and uniform on the surface of the core particles even in the dry coating method, which contributes to reducing a manufacturing cost. Further, an amount of the conductive material that is added may be minimized during the manufacture of a positive electrode, which may increase an amount of the positive electrode active material. Accordingly, a rechargeable lithium battery cell including the positive electrode active material may implement high capacity and high energy density.

The core particles and the graphite particulates described in the methods below may be the same as or similar to the core particles and graphite particulates described above and, thus, will not be repeated.

In a dry mixing process, the graphite particulates may be mixed in an amount ranging from about 0.1 parts by weight to about 0.5 parts by weight based on 100 parts by weight of the core particles, for example, ranging from about 0.1 parts by weight to about 0.4 parts by weight, from about 0.1 parts by weight to about 0.3 parts by weight, or from about 0.1 parts by weight to about 0.25 parts by weight. Even if the graphite particulates are mixed within the above ranges based on 100 parts by weight of the core particles, it is possible to achieve uniform coating on the core particle surface and implement electrical conductivity of the positive electrode active material. In addition, because an amount of the positive electrode active material may be increased by minimizing that of the conductive material during manufacture of a positive electrode, high capacity and high energy density may be achieved.

The dry mixing process may include any method of forming a coating layer by applying mechanical energy to the core particles including a lithium transition metal composite compound and the graphite particulates without using a solvent. Herein, the "dry" in the phrase "dry mixing process" means a state that there is no intentional contact with a solvent such as a process solvent or means a state where there is no intentional inclusion of the solvent.

The dry mixing includes a) a method of forming a coating layer by contacting a coating material, for example, graphite particulates, with the surface of the core particles and simultaneously agglomerating the graphite particulates, and b) a method of binding coating material particles to the surface of the core particles through the movement of a grinding medium or a rotor inside a device and, simultaneously, mechanically combining the coating material particles with each other on the core particles and providing a stress accompanying the coating material particles such that the coating layer (having the coating material particles) that is on the core particles melts or softens by heat generated from the stress, thereby binding the coating material particles to the surface of the core particles. However, the present invention is not limited thereto and may include any dry method in the technical field of the present disclosure that can achieve the same dry mixing objective.

The dry mixing may be performed according to a ball mill method such as a planetary ball mill method, a low-speed ball mill method, a high-speed ball mill method, or a mechanofusion method. For example, the dry method may be performed according to the mechanofusion method, which is a method in which a mixture is placed in a rotating container, the mixture is fixed to the inner wall of the container by centrifugal force, and the mixture is then compressed through a gap between the inner wall of the container and an arm head that is slightly close to the inner wall of the container. The mechanofusion method corresponds to the above b) method. The container may be, for example, a mixer having a blade inside, and the mixer may have a diameter from about 5 cm to about 15 cm and a gap from about 0.1 mm to about 5 mm. In addition, a rotation speed of the mixer is not specifically limited but may be, for example, from about 1000 rpm to about 5000 rpm, from about 1500 rpm to about 4500 rpm, from about 2000 rpm to about 4000 rpm, or from about 2500 rpm to about 3500 rpm, and the rotation time may vary depending on the rotation speed but may be from about 30 seconds to about 1 hour, from about 1 minute to about 30 minutes, or from about 5 minutes to about 15 minutes.

By forming the coating layer including the graphite particulates according to the above dry mixing process, no solvent is required (unlike when forming a coating layer according to the existing wet method), and, thus, manufacturing costs such as solvent purchase costs and solvent treatment costs after wet coating may be reduced.

### Rechargeable Lithium Battery

A rechargeable lithium battery according to some embodiments includes an electrolyte, a negative electrode, and a positive electrode including a positive electrode current collector and a positive electrode active material layer that is on the positive electrode current collector and that includes the positive electrode active material described above. A rechargeable lithium battery according to some embodiments may include a positive electrode having reduced powder resistance by including the aforementioned positive electrode active material. In addition, because the aforementioned positive electrode active material exhibits electrical conductivity in itself, the same effect may be achieved even with a relatively lesser amount of conductive material than when using a known positive electrode active material. Thus, a relatively large amount of positive electrode active material may be included, and, thus, energy density of the rechargeable lithium battery may be improved.

The rechargeable lithium battery may include a positive electrode, a negative electrode, a separator between the positive electrode and the negative electrode, and an electrolyte.

In some embodiments, an all-solid-state rechargeable battery includes the positive electrode, a negative electrode, and a solid electrolyte layer positioned between the positive electrode and the negative electrode.

The rechargeable lithium battery may be classified as being cylindrical, prismatic, a pouch type, or a coin type depending on the geometry of the rechargeable lithium battery.

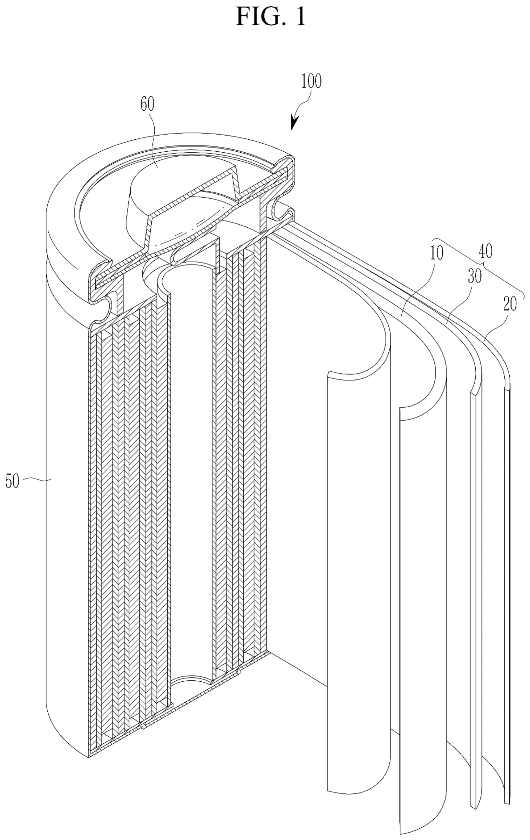

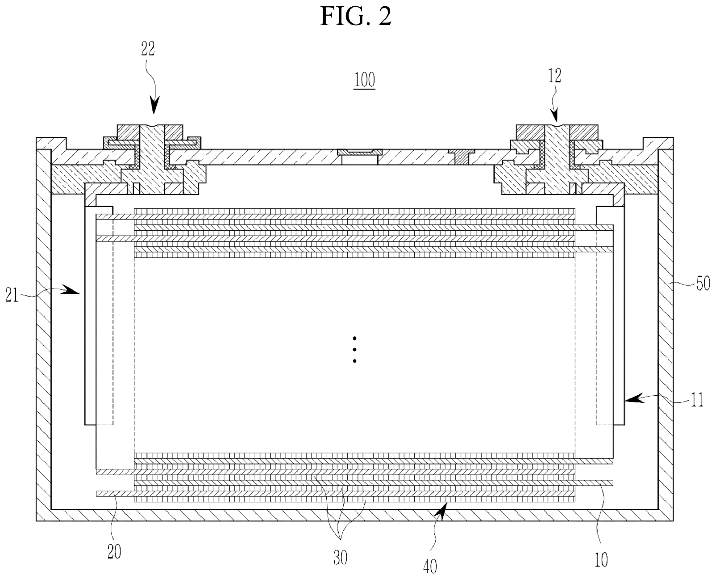

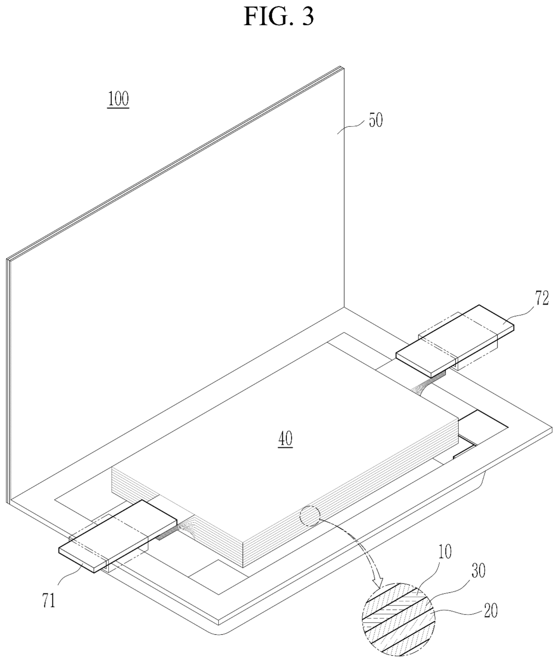

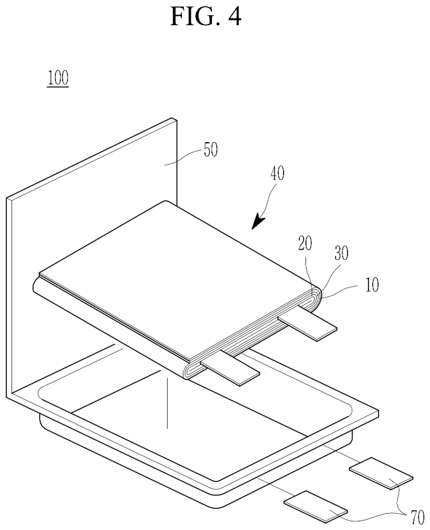

FIGS. 1 to 4 are each a schematic view showing a rechargeable lithium battery according to some embodiments of the present disclosure. Particularly, FIG. 1 shows a cylindrical battery, FIG. 2 shows a prismatic battery, and FIGS. 3 and 4 each show a battery having a pouch geometry. The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 or, particularly, includes a positive electrode tab 71 and a negative electrode tab 72 serving as an electrical path for inducing the current formed in the electrode assembly 40 to the outside.

### Positive Electrode

The positive electrode includes a positive electrode current collector, and a positive electrode active material layer disposed on the positive electrode current collector, the positive electrode active material layer including the aforementioned positive electrode active material.

The positive electrode current collector is not particularly limited as long as it has conductivity and does not cause a chemical change in the rechargeable lithium battery and may be an aluminum foil or a stainless steel foil having a thickness from about 10 µm to about 15 µm.

The positive electrode active material includes the aforementioned positive electrode active material. The specific details of the positive electrode active material are the same as described above and, thus, are omitted below.

An amount of the positive electrode active material may be from about 60 wt% to about 99.9 wt%, from about 70 wt% to about 99.8 wt%, from about 80 wt% to about 99 wt%, or from about 90 wt% to about 98 wt% based on a total weight (100 wt%) of the positive electrode active material layer. When the aforementioned positive electrode active material is included, the same effect may be achieved even with a relatively lesser amount of conductive material than when a known positive electrode active material is used. Thus, a relatively large amount of the positive electrode active material may be included, and, thus, the energy density may be improved.

The positive electrode active material layer may optionally further include a binder, a conductive material, or a combination thereof.

The binder improves binding properties of particles of the positive electrode active material with one another and with the positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the binder is not limited thereto.

An amount of the binder in the positive electrode active material layer may be from about 0.1 wt% to about 5 wt% and may be, for example, from about 0.1 wt% to about 3 wt%, from about 0.1 wt% to about 1 wt%, or from about 0.5 wt% to about 1 wt% based on a total weight (100 wt%) of the positive electrode active material layer.

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, Ketjen black, a carbon fiber, a carbon nanofiber, and/or a carbon nanotube; a metal-based material of a metal powder or a metal fiber including copper, nickel, aluminum, and/or silver; a conductive polymer such as a polyphenylene derivative; or a mixture thereof.

In the positive electrode active material layer, the conductive material may be included in a very small amount or may not be included at all. Energy density may be increased, and mixture density may be improved, by minimizing the amount of conductive material in the positive electrode active material layer.

An amount of the conductive material in the positive electrode active material layer may be less than or equal to about 5 wt%, less than or equal to about 4 wt%, less than or equal to about 3 wt%, less than or equal to about 2 wt%, less than or equal to about 1 wt%, less than or equal to about 0.5 wt%, or about 0 wt% based on a total weight (100 wt%) of the positive electrode active material layer. The positive electrode active material layer may include a positive electrode active material that is conductive, as described above, and may minimize the amount of the conductive material needed, or may remove the need for a conductive material altogether, which may allow for an increased amount of the positive electrode active material.

The density of the positive electrode active material layer may be about 2.0 g/cc to about 6.0 g/cc, for example about 2.3 g/cc to about 5.8 g/cc, about 2.5 g/cc to about 5.7 g/cc, or about 2.5 g/cc to about 5.5 g/cc. Additionally, when the lithium transition metal composite compound of the core particles is a lithium cobalt-based oxide, the density of the positive electrode active material layer may be from about 3.5 g/cc to about 5.0 g/cc, from about 3.7 g/cc to about 4.9 g/cc, from about 3.8 g/cc to about 4.8 g/cc, or from about 4.0 g/cc to about 4.5 g/cc. When the density of the positive electrode active material layer satisfies the above ranges, the energy density of the rechargeable lithium battery may be improved. Because the aforementioned positive electrode active material has high particle strength and a lubrication degree of the surface of the positive electrode active material, the compression process may be performed at a greater pressure. In addition, because the lubrication degree of the surface of the positive electrode active material is high, the compression efficiency of the positive electrode may be increased by a sliding effect. In addition, because the compression process may be performed at a greater pressure, the pores of the electrode plates in the positive electrode active material layer may be reduced, and the density of the positive electrode active material layer may be further improved.

Additionally, the resistance of the positive electrode active material layer may be less than or equal to about 35 Ω·cm, less than or equal to about 30 Ω·cm, less than or equal to about 25 Ω·cm, or less than or equal to about 20 Ω·cm and may be greater than or equal to about 0.5 Ω·cm, greater than or equal to about 1.0 Ω·cm, greater than or equal to about 3.0 Ω·cm, greater than or equal to about 5.0 Ω·cm, or greater than or equal to about 5.5 Ω·cm. Because the positive electrode active material layer includes the aforementioned positive electrode active material, the positive electrode active material layer can exhibit excellent electronic conductivity and can realize low resistance even if the positive electrode active material layer does not include a separate conductive material or includes a very small amount of conductive material.

A porosity of the positive electrode may be less than or equal to about 30%, less than or equal to about 25%, or less than or equal to about 20%, and greater than or equal to about 1%, greater than or equal to about 5%, or greater than or equal to about 7%. When the porosity of the positive electrode satisfies the above ranges, the capacity and energy density of the positive electrode may be improved. The porosity of the positive electrode means a ratio of the pores present within the positive electrode to a total volume of the positive electrode and may be measured, for example, by mercury porosimetry.

The positive electrode active material layer may further include a positive electrode active material other than the aforementioned positive electrode active material, an irreversible positive electrode additive, or a combination thereof, within a range that does not impede the purpose of the present invention, in addition to the aforementioned components.

The irreversible positive electrode additive refers to a compound that acts as a sacrificial positive electrode that can compensate for the conversion to irreversible Li that no longer participates in the charge/discharge reaction by participating in the formation of a SEI (solid electrolyte interface) film on the negative electrode surface during charge/discharge. The irreversible positive electrode additive is a compound that can be decomposed during the formation process to provide Li and does not participate in the subsequent charge/discharge process. By adding such an irreversible positive electrode additive, the consumed lithium may be replenished, thereby compensating for lithium loss and improving the energy density, cycle-life, and stability of the battery.

The irreversible positive electrode additive includes a compound that serves as a sacrificial positive electrode, such as an Fe-containing oxide, an Mn-containing oxide, and a Co-containing oxide.

The Fe-containing oxide may include Li₅FeO₄, LiFeO₂, LiFe₅O₈, or a combination thereof. The Mn-containing oxide may include overlithiated manganese oxide and examples thereof may include Li₆MnO₄. The Co-containing oxides may include overlithiated cobalt oxide, and examples thereof may include Li₆CoO₄. The Fe-containing oxide has greater electrochemical properties than the Mn-containing oxide, and, thus, the Fe-containing oxide can sufficiently play a role in compensating for irreversible Li and increase the utilization rate of the positive electrode active material. In addition, when the Co-containing oxide is used, Li₆CoO₄ is decomposed during charge and discharge to form Li₂O and CoO, and the formed CoO is dissolved into Co²⁺ in the electrolyte solution, causing Co to be eluted from the negative electrode and, thus, deteriorating battery characteristics.

### Negative Electrode

The negative electrode for a rechargeable lithium battery includes a negative electrode current collector and a negative electrode active material layer on the negative electrode current collector. The negative electrode active material layer includes a negative electrode active material and may optionally further include a binder, a conductive material, or a combination thereof.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may include a carbon-based negative electrode active material, for example, crystalline carbon, amorphous carbon, or a combination thereof. The crystalline carbon may be irregular, sheet, flake, spherical, or fiber shaped natural graphite or artificial graphite. The amorphous carbon may be a soft carbon, a hard carbon, a mesophase pitch carbonization product, or calcined coke.

As the alloy of lithium metal, an alloy of lithium and Na, K, Rb, Cs, Fr, Be, Mg, Ca, Sr, Si, Sb, Pb, In, Zn, Ba, Ra, Ge, Al, Sn, or a combination thereof may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy (wherein Q is an alkali metal, an alkaline earth metal, a Group 13 element, a Group 14 element [excluding Si], a Group 15 element, a Group 16 element, a transition metal, a rare earth element, or a combination thereof, and, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. The silicon-carbon composite may include a secondary particle (core) in which silicon primary particles are assembled and an amorphous carbon coating layer (shell) on the surface of the secondary particle. The amorphous carbon may also be present between the silicon primary particles; particularly, the silicon primary particles may be coated with amorphous carbon. The secondary particles may be dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, or calcined coke.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. The silicon particles may be present as silicon alone, may be present in the form of a silicon alloy, or may be present in an oxidized form. The oxidized form of the silicon may be represented as SiOₓ (0<x≤2). An atomic ratio of Si:O, which indicates the degree of oxidation, may be from about 99:1 to about 33:67. Herein, when a definition is not otherwise provided, an average particle diameter D₅₀ indicates a diameter of particle where an accumulated volume is about 50 volume% in a particle size distribution.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, the mixing ratio may be from about 1:99 to about 90:10 by weight.

The negative electrode active material may be included in an amount from about 90 wt% to about 99.8 wt% or from about 94 wt% to about 99 wt%, based on 100 wt% of the negative electrode active material layer.

The binder serves to adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, Ketjen black, a carbon fiber, a carbon nanofiber, and/or a carbon nanotube; a metal-based material of a metal powder or a metal fiber including copper, nickel, aluminum, and/or silver; a conductive polymer such as a polyphenylene derivative; or a mixture thereof.

An amount of the binder may be from about 0.1 wt% to about 5 wt% based on 100 wt% of the negative electrode active material layer, and an amount of the conductive material may be from about 0.1 wt% to about 5 wt% based on 100 wt% of the negative electrode active material layer.

The negative electrode current collector is not particularly limited as long as it has conductivity and does not cause a chemical change in the rechargeable lithium battery and may be a copper foil having a thickness from about 10 µm to about 15 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC). The ester-based solvent may include methyl acetate, ethyl acetate, n-propyl acetate, t-butyl acetate, methyl propionate, ethyl propionate, decanolide, mevalonolactone, valerolactone, and/or caprolactone. The ether-based solvent may include dibutyl ether, tetraglyme, diglyme, dimethoxyethane, 2-methyltetrahydrofuran, 2,5-dimethyltetrahydrofuran, and/or tetrahydrofuran. In addition, the ketone-based solvent may include cyclohexanone, for example. The alcohol-based solvent may include ethanol or isopropyl alcohol and the aprotic solvent may include nitriles such as R-CN (wherein R is a C2 to C20 linear, branched, or cyclic hydrocarbon group, and may include a double bond, an aromatic ring, or an ether group); amides such as dimethylformamide; dioxolanes such as 1,3-dioxolane, or 1,4-dioxolane; and/or sulfolanes.

The non-aqueous organic solvent may be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve a cycle-life of the battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), lithium bis(oxalato) borate (LiBOB) or a combination thereof.

A concentration of lithium salt may be within the range of about 0.1 M to about 2.0 M. When the concentration of lithium salt is within the above range, the electrolyte solution has appropriate ionic conductivity and viscosity, and, thus, excellent performance can be achieved, and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, and/or polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and polytetrafluoroethylene (e.g., TEFLON^{®}), or a copolymer or mixture of two or more thereof. The porous substrate may be formed of glass fibers, or may be a membrane in which the polymer and glass fibers are mixed.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate and a structural unit derived from (meth)acrylamidosulfonic acid or a salt thereof.

The inorganic material may include Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the inorganic material is not limited thereto. The inorganic material may be in a form of particles (e.g., inorganic particles). An average particle diameter D₅₀ of the inorganic particles may be from about 1 nm to about 2000 nm, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm or from about 1 µm to about 5 µm.

Hereinafter, the present invention will be described in detail via some exemplary embodiments. However, the examples described below merely show some embodiments the present invention, and the present invention is not limited to examples described below.

### Examples 1 to 3

### (1) Preparation of Positive Electrode Active Material

### (a) Preparation of Core Particles

Core particle were prepared using a lithium cobalt oxide (product name: 4.5V LiCoO₂, manufacturer: XTC). Specifically, 4.5V LiCoO₂ included large particle lithium cobalt oxide (LCO, LiCoO₂) in the form of single particles having an average particle diameter D₅₀ of 17 µm and small particle lithium cobalt oxide (LCO, LiCoO₂) in the form of single particles having an average particle diameter D₅₀ of 5 µm mixed in a weight ratio of 7:3 ([the large particle LCO]:[the small particle LCO]).

### (b) Preparation of Graphite Particulates

4 g of flake graphite (product name: C-one, manufacturer: G5; having an average size of 3 µm and a ratio I_{D}/I_{G} [of peak intensity I_{D} around 1350 cm⁻¹ to peak intensity I_{G} around 1580 cm⁻¹ in the Raman spectrum] of 0.12) was mixed with 40 g of ZrO beads having a particle diameter of 2 mm. Subsequently, the flake graphite was milled under a condition of 1,000 rpm for 1 hour to prepare graphite particulates.

Herein, the graphite particulates had an average size of 0.26 µm, a BET specific surface area of 300 m²/g, and a ratio I_{D}/I_{G} of peak intensity I_{D} around 1350 cm⁻¹ to peak intensity I_{G} around 1580cm⁻¹ in the Raman spectrum of 0.28.

### (c) Obtaining Positive Electrode Active Material

The core particles and the graphite particulates (used as a coating material having a weight ratio as shown in Table 1) were put in a dry mixer having a diameter of 9 cm and a gap of 2 mm, and then a shear force of 3000 rpm was applied to the core particles and the graphite particulates for 10 minutes to obtain a positive electrode active material including the core particles and a coating layer formed on the core particle surface and including graphene with a layered structure.

### (2) Manufacturing of Positive Electrode

The positive electrode active material and a binder mixture of poly(vinylidene fluoride) (PVdF) and polyacrylonitrile (PAN) in a weight ratio of 88.9:11.1 were mixed in weight ratio (i.e., [the positive electrode active material]:[the binder]) of 99.1:0.9 and then dispersed in N-methylpyrrolidone as a solvent to prepare a positive electrode active material slurry. The positive electrode active material slurry was coated on an aluminum thin film and dried to form a positive electrode active material layer and then compressed to manufacture a positive electrode. In the positive electrode, the positive electrode active material layer had a loading level of 16.5 mg/cm² and a mixture density of about 4.2 g/cc. In addition, as a result of SEM analysis of the compressed positive electrode, the positive electrode active material layer was confirmed to have a thickness of about 39 µm.

### (3) Manufacturing of Rechargeable Lithium Battery Cell

The manufactured positive electrode was used with a lithium metal counter electrode as a negative electrode to manufacture a 2032-type coin half-cell. A separator made of a porous polyethylene film and having a thickness of about 16 µm was disposed between the positive electrode and the lithium metal counter electrode, forming an electrode assembly, and an electrolyte solution was injected into the electrode assembly. The electrolyte solution was prepared by mixing ethylene carbonate (EC) and ethylmethyl carbonate (EMC) in a volume ratio of 3:5 and dissolving 1.1 M LiPF₆ in the mixed solvent.

**Table 1:**

| | Core particles (wt%) | Layered structured graphene (wt%) |
|---|---|---|
| Example 1 | 99.9 | 0.1 |
| Example 2 | 99.8 | 0.2 |
| Example 3 | 99.6 | 0.4 |

### Comparative Example 1

The bimodal lithium cobalt oxide (LCO) used as core particles in section '(1) Preparation of Positive Electrode Active Material' of Example 1 was used as a positive electrode active material. The positive electrode active material was used to manufacture a positive electrode and a rechargeable lithium battery cell substantially in the same manner as in Example 1.

### Comparative Example 2

A positive electrode and a rechargeable lithium battery cell were manufactured substantially in the same manner as in Example 2 except that the core particles and the graphite particulates were not dry-mixed but were mixed by using a vortex mixer in a vial at 3,300 rpm for 1 minute as opposed to the preparation in section '(1) Preparation of Positive Electrode Active Material' of Example 2. The positive electrode active material of Comparative Example 2 had no coating layer of graphite particulates on the core particle surface like the positive electrode active material of Comparative Example 1.

### Comparative Example 3

A positive electrode active material, a positive electrode, and a rechargeable lithium battery cell were manufactured substantially in the same manner as in Example 2 except that a coating layer was formed by using reduced graphene oxide (rGO; product name: rGO-SF, manufacturer: JMC Fine Chem) having an average lateral size of 3 µm instead of forming the coating layer including graphene with a layered structure by using the graphite particulates as a coating material as done in section '(1) Preparation of Positive Electrode Active Material' of Example 2. The average lateral size of rGO was obtained by measuring sizes of rGO pieces in horizontal direction (planar direction) and then averaging them.

### Comparative Example 4

A positive electrode active material, a positive electrode, and a rechargeable lithium battery cell were manufactured substantially in the same manner as in Example 2 except that a coating layer was formed by using Super P (product name: SUP-C65, manufacturer: TIMCAL) instead of forming the coating layer including graphene with a layered structure by using the graphite particulates as a coating material as done in section '(1) Preparation of Positive Electrode Active Material' of Example 2.

### Comparative Example 5

A positive electrode active material, a positive electrode, and a rechargeable lithium battery cell were manufactured substantially in the same manner as in Example 2 except that a coating layer was formed by using flake graphite (product name: C-one, manufacturer: G5; having an average size D₅₀ of 3 µm and a ratio I_{D}/I_{G} [of peak intensity I_{D} around 1350 cm⁻¹ to peak intensity I_{G} around 1580 cm⁻¹ in the Raman spectrum] of 0.12) before pulverization, instead of preparing the graphite particulates by pulverizing the graphite as done in section '(1) Preparation of Positive Electrode Active Material' of Example 2.

### Evaluation Example 1: Electron Microscope Image Analysis

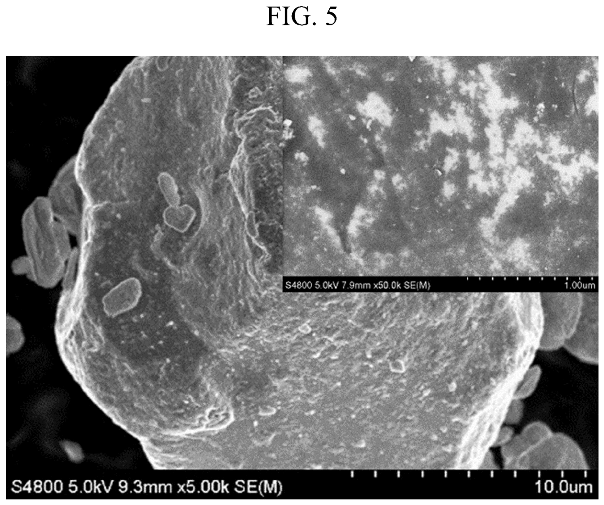

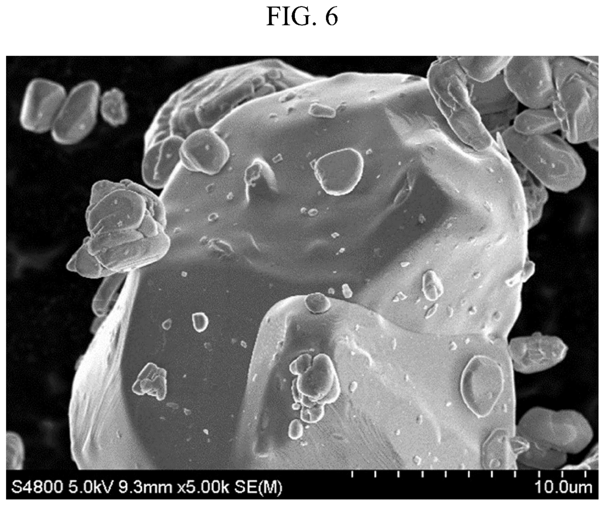

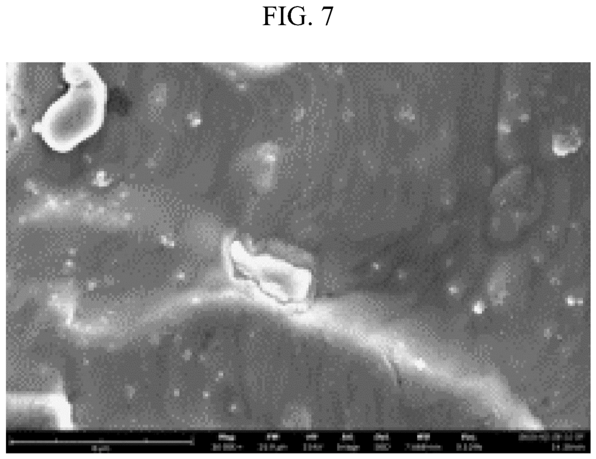

FIGS. 5 to 7 are scanning electron microscope (SEM) images showing surfaces of the positive electrode active materials of Example 2, Comparative Example 1, and Comparative Example 5, respectively, according to some embodiments of the present disclosure.

The positive electrode active material of Example 2, unlike the positive electrode active material of Comparative Example 1, was confirmed to have a coating layer on the core particle surface. On the other hand, in Comparative Example 5, the coating layer was formed using flake graphite, not using graphite particulates prepared by pulverizing the flake graphite as in Example 2. As a result, a coating layer of graphene with a layered structure was not formed on the core particle surface; instead, only a coating layer of flake graphite was present. These results indicate that the formation of a coating layer of graphene with a layered structure requires the use of graphite particulates prepared by pulverizing the flake graphite, as in Example 2.

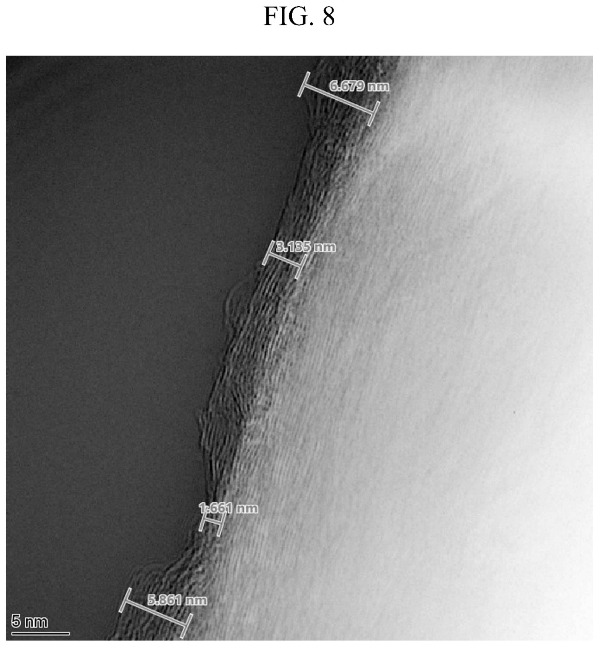

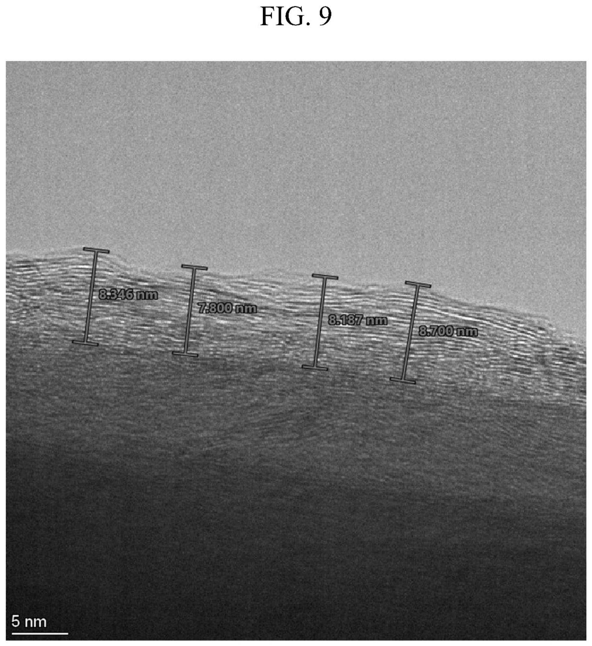

FIGS. 8 and 9 are transmission electronic microscope (TEM) images showing coating layers on cross-sections of the positive electrode active materials according to Examples 1 and 2, respectively, according to some embodiments of the present disclosure.

The positive electrode active materials of Examples 1 and 2 were each confirmed to have a coating layer with a very thin and uniform thickness on the core particle surface, the coating layer continuously wrapping around the core particle surface.

### Evaluation Example 2: Coating Layer Analysis of Positive Electrode Active Material

The positive electrode active materials of Examples 1 to 3 were analyzed with respect to the number of layers and the thicknesses of the coating layers, and the results are shown in Table 2. In the positive electrode active materials of Comparative Examples 1 and 2, an evaluation was not performed because a coating layer was neither present nor formed. In the positive electrode active materials of Comparative Examples 3 to 5, an evaluation was not performed either because a coating layer, though present, was not formed of graphite particulates.

Specifically, images of the cross-sections of the particles of the positive electrode active material were taken with a scanning electron microscope to measure a thickness and a number of layers at 20 points in the image, and the values for the various thicknesses and the numbers of layers across the 20 points were respectively averaged.

**Table 2:**

| | Thickness of layer (nm) | The number of layers (ea) |
|---|---|---|
| Example 1 | 5.8 | 17 |
| Example 2 | 10.5 | 31 |
| Example 3 | 15.8 | 46 |

### Evaluation Example 3: Measurement of Powder Resistance and Powder Conductivity of Positive Electrode Active Material

The positive electrode active materials of Examples 1 to 3 and Comparative Examples 3 to 5 were measured with respect to powder conductivity. In the positive electrode active materials of Comparative Examples 1 and 2, because a coating layer was neither present nor formed, the evaluation was not performed.

The powder conductivity of the positive electrode active materials was obtained by measuring powder resistance of 3 g of each of the positive electrode active materials, while adjusting a pressure by using a powder resistance meter equipped with a 4-pin probe (i.e., PD-600, Nittoseiko Analytech), and taking a reciprocal of the powder resistance at a pressure of 250 MPa, and the results are shown in Table 3 below.

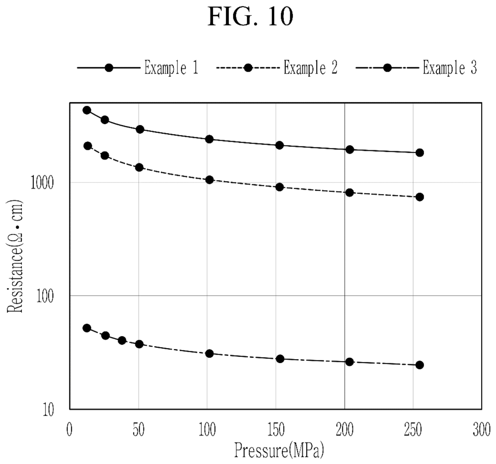

In order to check powder resistance results according to a coating amount, the positive electrode active materials of Examples 1 to 3 were measured with respect to powder resistance vs. pressure, and the results are shown in FIG. 10.

FIG. 10 is a graph showing powder resistance vs. pressure of the positive electrode active materials prepared in Examples 1 to 3 according to some embodiments of the present disclosure.

The positive electrode active materials coated with graphene having a layered structure were confirmed to exhibit powder resistance that was reduced as pressure increased, such that, as the amount of the graphene increased, the powder resistance significantly decreased, which confirmed that powder conductivity was significantly excellent.

**Table 3:**

| | Type of core particles | Coating material | Powder conductivity (mScm⁻¹) |
|---|---|---|---|
| Example 1 | lithium cobalt oxide (LCO) | Graphene having layered structure | 0.6 |
| Example 2 | | Graphene having layered structure | 1.4 |
| Example 3 | | Graphene having layered structure | 40.4 |
| Comparative Example 3 | | rGO | 0 |
| Comparative Example 4 | | Super P | 0 |
| Comparative Example 5 | | graphite | 0 |

Referring to Table 3, Examples 1 to 3 (in which graphene with a layered structure was coated by using graphite particulates) exhibited powder conductivity even if the graphite particulates were added in a small amount (i.e., from about 0.1 wt% to about 0.4 wt%), but Comparative Examples 3 to 5 (in which rGO, Super P, and graphite were respectively coated) exhibited no powder conductivity. The positive electrode active materials of Comparative Examples 3 to 5 are expected to exhibit no powder conductivity, even when about 0.4 wt% of rGO, Super P, and graphite-same as that included in the positive electrode active material of Example 3-is added. Thus, the positive electrode active material according to some embodiments, in which the graphene with a layered structure was coated by using the graphite particulates, was confirmed to exhibit powder conductivity, even when coated in a lesser amount than when coated with other coating materials.

### Evaluation Example 4: Performance Evaluation of Rechargeable Lithium Battery

### Cell

### (1) Initial Charge/discharge Capacity and Efficiency

The rechargeable lithium battery cells of Examples 1 to 3 and Comparative Examples 1 to 5 were charged to an upper limit voltage of 4.56 V at a constant current of 0.35 C-rate and discharged to a discharge cut-off voltage of 3 V at the 0.35 C-rate at 25°C to measure initial charge/discharge capacity, which is shown in Table 4 below.

### (2) Energy Density

The rechargeable lithium battery cells of Examples 1 to 3 and Comparative Examples 1 to 5 were measured with respect to energy density as follows. The positive electrodes manufactured respectively by using the positive electrode active materials of Examples 1 to 3 and Comparative Examples 1 to 5 were compressed under the same condition as described above to measure the thickness of each positive electrode, and then each thickness was used to calculate an electrode density and a capacity, and the results are shown in Table 4 below.

**Table 4:**

| | Initial charge capacity (mAh/g) | Initial discharge capacity (mAh/g) | Initial charge/ discharge efficiency (%) | Energy density (mAh/cc) |
|---|---|---|---|---|
| Example 1 | 202.7 | 184.5 | 91.0 | 784.1 |
| Example 2 | 204.0 | 186.9 | 91.6 | 794.3 |
| Example 3 | 205.5 | 188.9 | 91.9 | 799.2 |
| Comparative Example 1 | 200.4 | 178.9 | 89.3 | 753.2 |
| Comparative Example 2 | 200.8 | 179.0 | 89.1 | 733.9 |
| Comparative Example 3 | 201.0 | 179.4 | 89.3 | 753.5 |
| Comparative Example 4 | 202.1 | 179.7 | 88.9 | 751.1 |
| Comparative Example 5 | 201.6 | 179.2 | 88.9 | 736.5 |

Referring to Table 4, the rechargeable lithium battery cells respectively including the positive electrode active materials of Example 1 to 3 coated with graphene having a layered structure by using graphite particulates were confirmed to exhibit excellent efficiency of 90% or greater and significantly high energy density as well as an excellent initial charge/discharge capacity, as opposed to the rechargeable lithium battery cells of Comparative Examples 1 to 5. This is because the graphene with a layered structure was coated by using the graphite particulates, thereby imparting powder conductivity to the positive electrode active materials of Examples 1 to 3.

On the other hand, the rechargeable lithium battery cells of Comparative Examples 3 to 5 (in which known carbon-based materials were coated, instead of coating the graphene with a layered structure by using the graphite particulates) exhibited no powder conductivity and, thereby, deteriorated battery performance.

It was confirmed that a positive electrode active material (in which graphene with a layered structure was coated on the surface of core particles by using graphite particulates) may exhibit its own powder conductivity, which makes it possible to not add a conductive material, or at least makes it possible to minimize an amount of the conductive material, while employing a maximum amount of the positive electrode active material, thereby improving overall battery performance.

While some embodiments have been described above, the present disclosure is not limited to the above-described embodiments. Rather, the present disclosure is also intended to cover various modifications to, and equivalent arrangements of, the above-described embodiments.

**<Description of Representative Reference Numerals>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A positive electrode active material comprising:
a core particle comprising a lithium transition metal composite compound; and
a coating layer disposed on a surface of the core particle and comprising graphene that has a layered structure,
wherein the positive electrode active material has a powder conductivity of greater than or equal to 0.1 mScm⁻¹ when measured at a pressure of 250 MPa.

2. The positive electrode active material as claimed in claim 1, wherein the lithium transition metal composite compound comprises a lithium cobalt-based oxide represented by the following:
Liₐ₂Coₓ₂M³_{y2}O_{2-b2}X_{b2},
wherein 0.9≤a2≤1.8, 0.7≤x2≤1, 0≤y2≤0.3, 0.9≤x2+y2≤1.1, and 0≤b2≤0.1,
wherein M³ is Al, B, Ba, Ca, Ce, Cr, Cu, Fe, Mg, Mn, Mo, Ni, Se, Si, Sn, Sr, Ti, V, W, Y, Zn, Zr, or a combination thereof, and
wherein X is F, P, S, or a combination thereof.

3. The positive electrode active material as claimed in claim 1 or claim 2, wherein the core particle is in a form of a single particle.

4. The positive electrode active material as claimed in claim 1 or claim 2, wherein the core particle comprises:
small particles having an average particle diameter D₅₀ of greater than or equal to 0.1 µm and less than 9 µm; and
large particles having an average particle diameter D₅₀ from 9 µm to 30 µm.

5. The positive electrode active material as claimed in any one of claims 1 to 4, wherein the coating layer comprises graphene having from 2 to 50 layers.

6. The positive electrode active material as claimed in any one of claims 1 to 5, wherein an interlayer spacing d₀₀₂ of the layered structure is from 0.320 nm to 0.350 nm.

7. The positive electrode active material as claimed in any one of claims 1 to 6, wherein the graphene has a ratio I_{D}/I_{G}, represented as a peak intensity I_{D} near 1350 cm⁻¹ to a peak intensity I_{G} near 1580 cm⁻¹ in the Raman spectrum, of 0.15 to 0.50.

8. The positive electrode active material as claimed in any one of claims 1 to 7, wherein the graphene of the coating layer is derived from graphite particulates having an average size of less than or equal to 2.5 µm.

9. The positive electrode active material as claimed in any one of claims 1 to 8, wherein an amount of the graphene is from 0.01 wt% to 1 wt% based on 100 wt% of the positive electrode active material.

10. The positive electrode active material as claimed in any one of claims 1 to 9, wherein the coating layer is a film that continuously surrounds the surface of the core particle, and
wherein a thickness of the coating layer is from 1 nm to 40 nm.

11. A method of preparing a positive electrode active material, the method comprising:
preparing core particles comprising a lithium transition metal composite compound;
preparing graphite particulates having an average size D₅₀ of less than or equal to 2.5 µm; and
dry mixing the core particles and the graphite particulates to obtain a positive electrode active material.

12. The method as claimed in claim 11, wherein the preparing of the graphite particulates comprises pulverizing flake graphite having an average size D₅₀ from 3 µm to 25 µm.

13. The method as claimed in claim 12, wherein the pulverizing is performed using a ball mill device comprising zirconia beads each having a size from 1 mm to 3 mm, and
performed at a speed ranging from 200 rpm to 5,000 rpm for a period ranging from 30 minutes to 4 hours.

14. The method as claimed in any one of claims 11 to 13, wherein the dry mixing is performed with an amount of graphite particulates ranging from 0.1 parts by weight to 0.5 parts by weight per 100 parts by weight of the core particles.

15. A rechargeable lithium battery comprising:
a positive electrode comprising:
a positive electrode current collector; and
a positive electrode active material layer disposed on the positive electrode current collector, the positive electrode active material layer comprising the positive electrode active material of any one of claims 1 to 10;
a negative electrode; and
an electrolyte.
